Europäisches Patentamt

(19) European Patent Office

Office européen des brevets

(11) Publication number: **0 252 038**
**B1**

(12)                     EUROPEAN PATENT SPECIFICATION

(45) Date of publication of the patent specification:
**12.09.90**

(51) Int. Cl.⁵: **H04B 3/23**

(21) Application number: **87850149.3**

(22) Date of filing: **05.05.87**

(54) Apparatus for detecting received signals in a telecommunication system.

(30) Priority: **17.06.86 SE 8602699**

(43) Date of publication of application:
**07.01.88 Bulletin 88/1**

(45) Publication of the grant of the patent:
**12.09.90 Bulletin 90/37**

(84) Designated Contracting States:
**BE DE FR GB IT NL**

(56) References cited:
**US-A- 4 215 252**
**US-A- 4 237 463**

(73) Proprietor: **TELEFONAKTIEBOLAGET L M ERICSSON,**
**S-126 25 Stockholm(SE)**

(72) Inventor: **Haulin, Tord Lennart, Hammarbygatan 52,**
**S-753 24 Uppsala(SE)**

## Description

### TECHNICAL FIELD

The invention relates to an apparatus in a telecommunication system for the transmission of digital information in duplex, where the apparatus detects signals sent from a remote end and generates correctional signals intended to adjust a digital balance filter for adaptive echo elimination.

### BACKGROUND ART

In prior art apparatus of the kind mentioned above, the value of an instant echo estimation from the balance filter is converted to an analogue signal in a D/A converter. The analogue signal is then subtracted from the signal coming from the remote end in a difference-forming circuit. The signal difference thus obtained is taken to a comparator, the output signal of which, accordingly constitutes an estimation of the value of the remote end signal. It is also known for the D/A converter to be supplied after the first comparison with a value which, in response to the estimated value of the remote end signal, either corresponds to the echo estimation plus or minus a remote level estimation. By remote level estimation is intended the expected voltage contribution from the remote end signal, i.e. the voltage with which the received signal is expected or fall below the echo from the local transmitter signal.

### DISCLOSURE OF INVENTION

The object of the present invention is to provide an apparatus of the kind mentioned in the introduction, which is less voluminous but simultaneously more reliable than those of the prior art. This is achieved by the D/A converter included in conventional apparatus being replaced by an A/D converter-like circuit. There is thus eliminated an operational amplifier which requires a comparatively large amount of space, usually operates slowly and has non linear characteristic. In addition, a difference-forming circuit is eliminated, this circuit forming in the conventional apparatus the difference between the incoming signal and the output signal of the D/A converter. Finally, the circuits executing a digital addition (or subtraction) of the echo estimation and remote level estimation are eliminated.

The distinguishing features of the invention are apparent from the claims.

### BRIEF DESCRIPTION OF DRAWINGS

The invention will now be described in detail with reference to the drawings on which

Figure 1 is a block diagram of a known apparatus for adaptive echo elimination,

Figure 2 is a circuit generating input signals to a D/A converter included in the apparatus according to Figure 1,

Figure 3 is a wiring diagram of a known D/A converter,

Figure 4 illustrates an apparatus in accordance with the invention,

Figure 5 illustrates a circuit generating input signals to an A/D converter-like circuit included in the apparatus according to Figure 4.

### BEST MODE FOR CARRYING OUT THE INVENTION

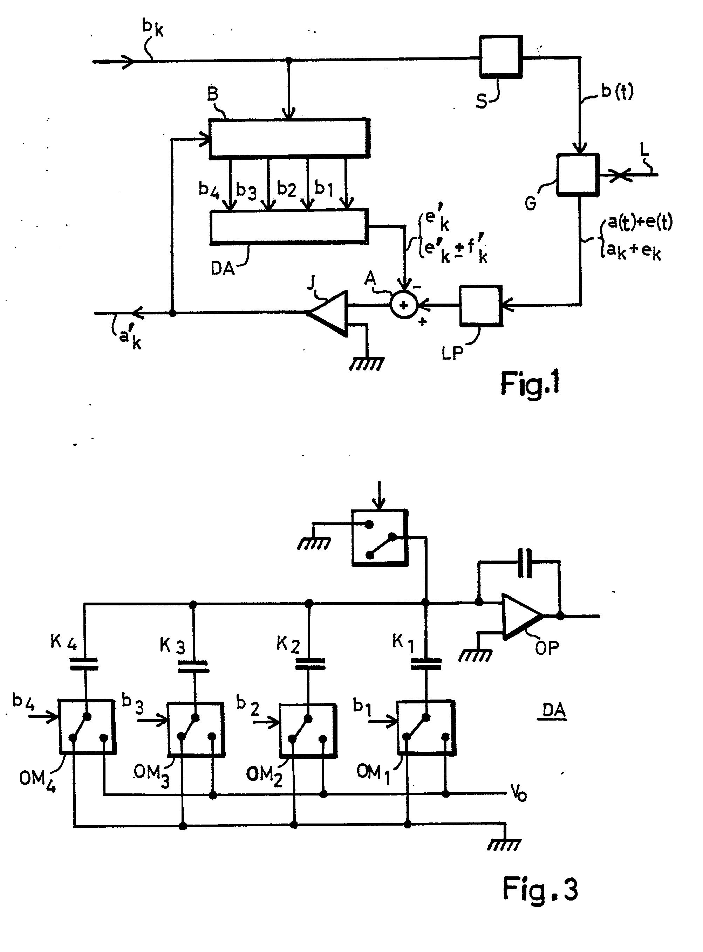

An apparatus of the prior art for adaptive echo elimination is illustrated in Figure 1. A similar apparatus is also described in the Swedish patent specification 8106444-6 (426 764), equivalent to International patent publication WO-A 8 301 716. A data sequence $b_k$ comprising ones and zeros sent from a data source is supplied to a transmitter unit S for conversion of the data sequence to a suitable analogue signal $b(t)$. This signal is supplied to a line L via a hybrid circuit G for transmission to a receiver at the remote end. Incoming signals are taken from the hybrid G via a lowpass filter LP to an input in a difference-forming circuit A. The incoming signals comprise a signal $a(t)$ sent from the remote end and an echo signal $e(t)$ coming from the local signal $b(t)$. In a balance filter for adaptive echo elimination there is conventionally generated an estimation of the expected echo signal in response to a given number, e.g. seven, of the latest sent data bits $b_k$. The echo estimation, which is digital, is converted to an analogue signal in a D/A converter DA and is then subtracted from the signal from the lowpass filter. The values of the remote end signal, the echo signal and the echo estimation at different sampling times are denoted by $a_k$, $e_k$ and $e'_k$. At a first comparison time the difference signal obtained on subtraction is compared with a zero voltage in a comparator J to form a value $a'_k$ which is an estimation of whether the remote end signal $a_k$ is a one or a zero.

The echo is sometimes considerably stronger than the signal received from the remote end, and a rapid adjustment of the digital filter parameters is desirable. Such an adjustment takes place conventionally and automatically, e.g. as described in the above-mentioned patent specification, it then being usually said that the filter converges. When the filter has converged, the value of the mentioned difference signal will be at least approximately equal to the voltage contribution from the remote end signal.

After the first comparison time, the converter DA is supplied a digital value which, in response to the comparison result from the comparator J is equal to the echo estimation $e'_k$ plus or minus a remote level estimation $f'_k$. As mentioned above, what is intended by remote level estimation is the expected voltage contribution from the remote end signal, i.e. the voltage with which the received signal level is expected to exceed or fall below the echo level. At a second comparison time, the difference is compared between the value of the received signal $a_k + e_k$ and the echo estimation $e'_k$ plus or minus the remote level estimation $f'_k$ with the zero voltage continually supplied to the comparator J. This difference will be practically equal to zero when the filter has converged.

Apart from the first comparison being used for detecting the remote signal value, both comparisons are utilised for adjusting the filter parameters. It can be mentioned that each echo estimation is dependent on the instant bit combination in the data sequence $b_k$. As mentioned above, consideration is paid to, for example, the seven latest sent data bits. The remote level estimation is, however, independent of the transmitted bit combinations. Both the echo estimations and the remote level estimations are corrected in response to said comparisons.

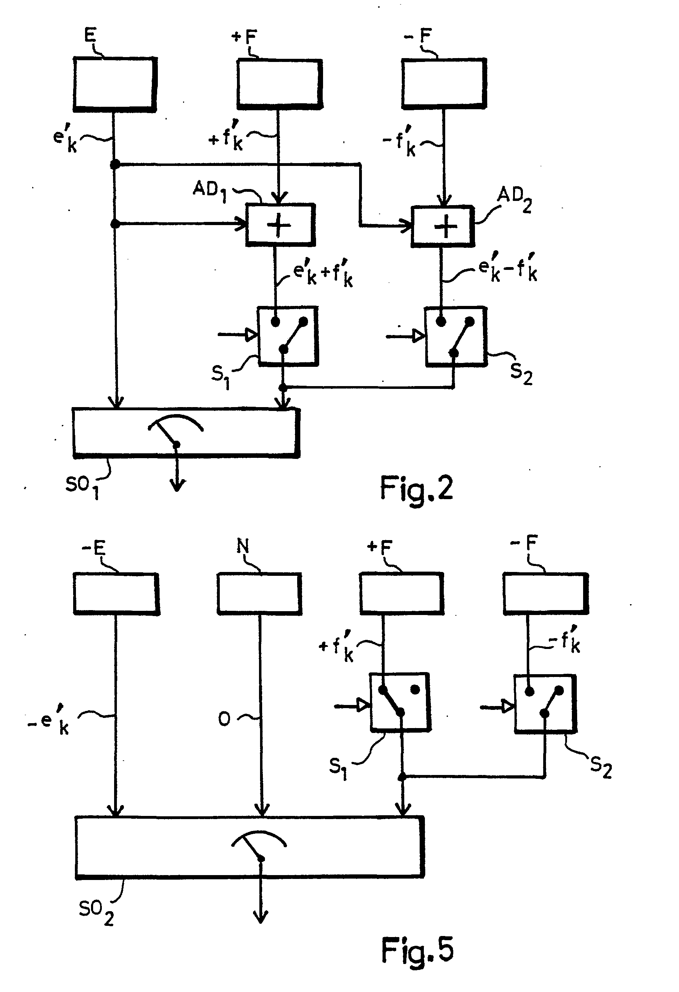

In the illustrated apparatus, there is a digital addition (or subtraction), of the echo estimation and the remote level estimation. This takes place in a circuit which can be conceived as being a part of the digital balance filter and is not illustrated in Figure 1. As an example, there is illustrated in Figure 2 a principle sketch of such a circuit. A register is denoted E and contains the instant echo estimation $e'_k$, and registers denoted +F and -F which contain the remote level estimation respectively with postive, $+f'_k$, and negative, $-f'_k$, signs. The value of the echo estimation plus the remote level estimation, $e'_k + f'_k$ is formed in an adder $AD_1$, and in an adder $AD_2$ there is formed the value of the echo estimation minus the remote level estimation, $e'_k - f'_k$. At the first comparison time the value of the echo estimation $e'_k$ is given at the output from a sequency switch $SO_1$. At the second comparison time and in response to the first comparison result there is given the echo estimation plus or minus the remote level estimation at the output of the sequence switch. The first comparison result is utilised for controlling two switches $S_1$ and $S_2$.

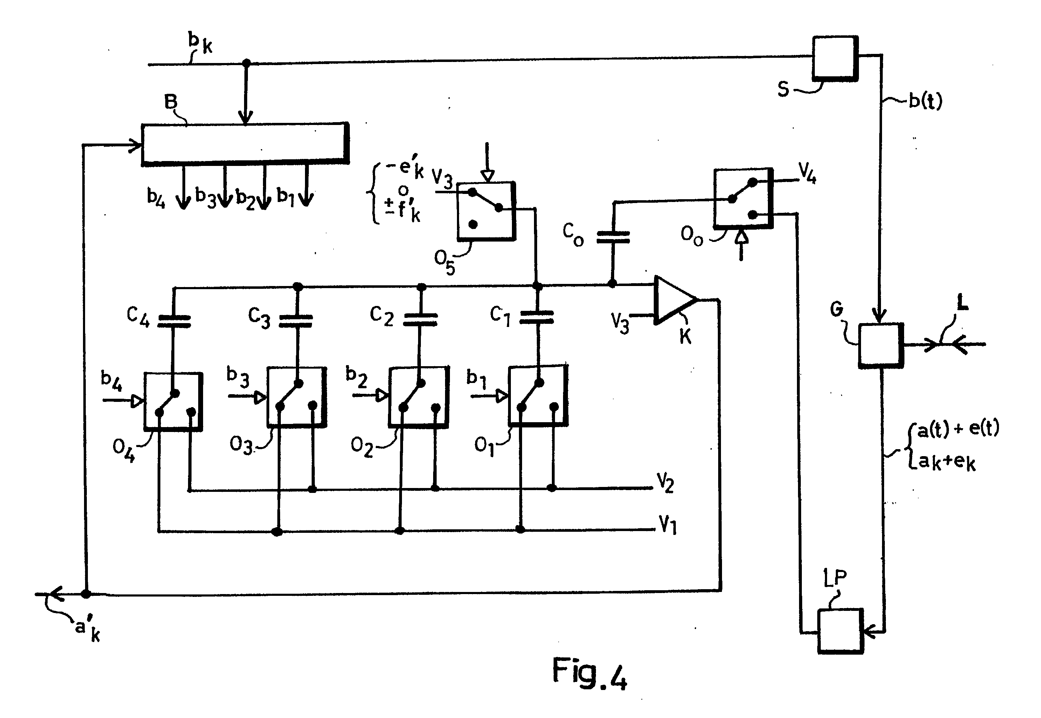

The D/A converter DA in Figure 1 is implemented, for example, as a so-called charge redistribution converter comprising a plurality of capacitors with mutually binarily weighted capacitances. An example of such a converter is illustrated in Figure 3. A plurality of controllable switches $OM_1$-$OM_4$ are switched in response to an incoming digital word $b_4$-$b_1$ for selectively connecting a plurality of capacitors $K_4$-$K_1$ to earth or to a reference voltage $V_0$. The capacitances of the capactiors are usually mutually, binarily weighted. The converter also includes an operational amplifier OP which, according to the above is comparatively voluminous, operates slowly and has a non-linear characteristic.

An embodiment is illustrated in Figure 4 of an apparatus in accordance with the invention. Means having correspondence in Figure 1 have been denoted in the same way as in this Figure. The D/A converter DA in Figure 1 is replaced by a circuit which is reminiscent of a A/D converter. This circuit comprises capacitors $C_1$ - $C_4$ with mutually, binarily weighted capacitances, controllable switches $0_1$ - $0_4$ for selectively switching the capacitors between the reference voltage $V_1$ and $V_2$, a comparator K, a sampling capacitor $C_0$ and controllable switches $0_0$ and $0_5$.

A means for sampling and approximation logic, which generates control signals to the switches is also included in a complete A/D converter of this kind. The control signals are dependent on the comparison results of the comparator during the so-called approximation phase, and are generated according to some suitable algorithm, e.g. successive approximations with binary search. In A/D conversion with a converter of this kind, the input signal is supplied to one input of the comparator K via the switch $0_0$ and the capacitor $C_0$ during a sampling phase. This input is also connected to a reference voltage $V_3$ via the switch $0_5$, while the other input of the comparator is constantly supplied with the voltage $V_3$. After the sampling phase, the switch $0_5$ is put to its open position and the switch $0_0$ from the input signal to a reference voltage $V_4$. The charge changes then occuring will be compensated during the approximation phase by equally as great charge changes in the opposite direction. This signifies that the switching positions of the switches $0_1$ - $0_4$ shall be changed during this time as much as the change on the digital side corresponds to the voltage difference between the analogue input signal voltage and the reference voltage $V_4$. The voltage change which is corresponded to by changes in the positions of the switches at the beginning and termination of the approximation phase will thus have opposite direction compared with the voltage change on the analogue side. For example, if the analogue signal voltage is +5V and the reference voltage $V_4$ is equal to 0V, the positions of the switches will correspond to +5V at the termination of the approximation phase if they corresponded to 0V at its beginning.

In the apparatus in accordance with the invention, the balance filter B functions to a certain extent as means for sampling and approximation logic in an A/D converter. The output signal of the balance filter thus controls the switches $0_1$ - $0_4$, inter alia in response to the output signal of the comparator K. The incoming signal $a_k + e_k$ from the lowpass filter LP is supplied to the switch $0_0$ during a sampling phase. At the same time, the switches $0_1$ - $0_4$ are adjusted so that the switching positions correspond to the instant echo estimation with reversed sign, i.e. $-e'_k$. At a first approximation the switches $0_1$ - $0_4$ are set so that the switching positions correspond to a zero code. This signifies that the input signal $a_k + e_k$ from the lowpass filter is compared with an echo estimation $e'_k$. There is thus obtained an estimation $a'_k$ of the remote end signal. In response to the comparison result, the balance filter B sends the remote level estimation $f'_k$ with positive or minus sign at a control signal to the switches $0_1$ - $0_4$ for adjusting these to a second approximation. This signifies that the input signal $a_k + e_k$ is compared with an echo estimation $e'_k$ plus the remote level estimation $f'_k$, if the remote end signal is a one, and with the echo estimation minus the remote level estimation if the remote end signal is a zero. Similar to the known apparatus according to Figure 1, the first comparison result is utilised for estimating the remote end signal and also for adjusting the balance filter parameters, while the second comparison result is only utilised for said adjustments.

In the same way as with the known apparatus, it has been assumed that the balance filter includes circuits generating the desired signals at the comparison times. A schematic embodiment of these circuits is illustrated in Figure 5. Means with correspondence in Figure 2 have been given the same reference denotations as previously. A register denoted by -E contains the instant echo estimation with reversed sign, $-e'_k$. A register N contains a zero value. The register +F and -F contain the remote level estimation with different signs, $+f'_k$ and $-f'_k$, respectively. A sequence switch $SO_2$ sends the echo estimation with reverse sign, $-e'_k$, at the sampling time, a zero code for the first approximation and plus or minus the remote level estimation at the second approximation. The result of the first comparison decides whether $+f'_k$ or $-f'_k$ shall be connected to one of the sequence switches' inputs with the aid of the switches $S_1$ and $S_2$. The circuit generating the desired signals at the different times can of course be realised in other ways than what has been shown above. It may also comprise a separate circuit outside the balance filter instead of being included in it, or it may be a part of a separate means for sampling and approximation logic, which is connected to the balance filter.

With the inventive apparatus, the operational amplifier required in the A/D converter DA in Figure 1 and the difference - forming circuit A have thus been eliminated. Since the control signals to the switches in the D/A converter-like circuit utilised in accordance with the invention comprise the echo estimation with reverse sign, a zero code and finally plus or minus the remote level estimation, no digital adder corresponding to $AD_1$ and $AD_2$ in Figure 2 is required either.

The invention may, of course, be varied. For example, the number of capacitors in the A/D converter-like circuit in Figure 4 may be varied considerably. Neither do the capacitors need to have mutually, binarily weighted capacitances. What is essential is that as in ordinary A/D conversion that the charge can be redistributed in a plurality of different ways. A series capacitor can conventionally be included in the A/D converter-like circuit somewhere in series with the line connecting the capacitors $C_1$ - $C_4$ in Figure 4.

## Claims

1. Apparatus in a telecommunication system for the transmission of digital information in duplex, where the apparatus detects signals sent from a remote end and generates correctional signals intended to adjust a digital balance filter for adaptive echo elimination, characterized in that the apparatus includes a plurality of capacitive elements ($C_0$ - $C_4$), a plurality of controllable switches ($O_0$ - $O_5$) and a comparator (K) which are arranged as in an A/D converter for converting by charge redistributions, in that a signal line coming in from the remote end is connected to a point corresponding to the input of such a converter, that the switching positions of the controllable switches ($O_1$ - $O_4$) during a

time corresponding to a sampling phase of such a converter correspond to the value of the instant echo estimation with reverse sign ($-e'_k$), in that said switching positions at a time corresponding to the time for a first approximation of such a converter correspond to a zero code (0) and at a time corresponding to the time for a second approximation in response to the comparison result of the comparator (K) at said first approximation correspond to the value of a remote level estimation with either positive or negative sign, the comparison result at the first approximation constituting an estimation ($a'_k$) of the remote end signal ($a_k$), this estimation of the remote end signal as well as the comparison result and said second approximation is utilised for adjusting the balance filter (B).

2. Apparatus as claimed in claim 1, characterized in that one of the capacitive elements ($C_0$) is coupled between a first input of the comparator (K) and one of the switches ($O_0$) and this switch is switchable between the incoming signal line and a reference voltage ($V_4$), in that another of the switches ($O_5$) is connected with said first input and in that this switch ($O_5$) is switchable between a reference voltage ($V_3$) and an open position.

3. Apparatus as claimed in claim 2, characterized in that the remaining capacitive elements ($C_1$ -$C_4$) are connected in series each with one of the remaining switches ($O_1$ - $O_4$), that these switches can be switched between two reference voltages ($V_1$ - $V_2$) and that these capacitive elements ($C_1$ - $C_4$) are arranged such that the voltage at said first input of the comparator (K) is in response to the switching positions of each of these remaining switches ($O_1$ - $O_4$).

4. Apparatus as claimed in claim 3, characterized in that the capacitances of said remaining capacitive elements ($C_1$ - $C_4$) are mutually binarily weighted.

5. Apparatus as claimed in claims 3-4, characterized in that said remaining switches ($O_1$ - $O_4$) obtain control signals ($b_4$ - $b_1$) from the balance filter (B).

6. Apparatus as claimed in claims 3-4, characterized in that said remaining switches ($O_1$ - $O_4$) obtain control signals from a separate means for sampling and approximation logic, which is connected to the balance filter (B).

## Patentansprüche

1. Vorrichtung in einem Nachrichtenübertragungssystem zur Übertragung digitaler Daten im Gegensprechverkehr, wobei die Vorrichtung die von einer Gegenstelle ausgesandten Signale erfasst und Korrektursignale erzeugt, die zur Einstellung eines digitalen Ausgleichsfilters zur adaptiven Echounterdrückung betimmt sind, dadurch gekennzeichnet, dass die Vorrichtung eine Anzahl kapazitiver Elemente ($C_0$–$C_4$) umfasst, eine Anzahl steuerbarer Schalter ($O_0$–$O_5$) und einen Komparator (K), die wie in einem A/D-Umsetzer zur Umsetzung durch Ladungsneuverteilungen angeordnet sind, dass eine Signalleitung, die von der Gegenstelle herangeführt ist, mit einem Punkt verbunden ist, der dem Eingang eines derartigen Umsetzers entspricht, dass die Schaltpositionen der steuerbaren Schalter ($O_1$–$O_4$) während einer Zeit, die der Abfragephase eines derartigen Umsetzers entspricht, dem Betrag der augenblicklichen Echoschätzung mit umgekehrten Vorzeichen (–$e'_k$) entsprechen, dass die Schaltpositionen zu einem Zeitpunkt, der dem Zeitpunkt für eine erste Annäherung eines derartigen Umsetzers entspricht, einem Nullcode (O) entsprechen und zu einem Zeitpunkt, der dem Zeitpunkt für eine zweite Annäherung, abhängig vom Vergleichsergebnis des Komparators (K) bei der ersten Annäherung entspricht, dem Wert einer Fernpegelabschätzung mit entweder positiven oder negativen Vorzeichen, wobei das Vergleichsergebnis bei der ersten Annäherung eine Schätzung ($a'_k$) des Gegenstellensignals ($a_k$) darstellt, und diese Schätzung des Gegenstellensignals wie auch das Vergleichsergebnis und die zweite Annäherung zur Einstellung des Ausgleichsfilters (B) verwendet werden.

2. Vorrichtung nach Anspruch 1, dadurch gekennzeichnet, dass eines der kapazitiven Elemente ($C_0$) zwischen einem ersten Eingang des Komparators (K) und einem der Schalter ($O_0$) gekoppelt ist und dieser Schalter zwischen der ankommenden Signalleitung und einer Bezugsspannung ($V_4$) schaltbar ist, dass ein weiterer der Schalter ($O_5$) mit dem ersten Eingang verbunden ist und dass dieser Schalter ($O_5$) zwischen einer Bezugsspannung ($V_3$) und einer Öffnungsstellung schaltbar ist.

3. Vorrichtung nach Anspruch 2, dadurch gekennzeichnet, dass die verbleibenden kapazitiven Elemente ($C_1$–$C_4$) in Reihe mit einem der verbleibenden Schalter ($O_1$–$O_4$)) verbunden sind, dass diese Schalter zwischen zwei Bezugsspannungen ($V_1$–$V_2$) geschaltet werden können und dass diese kapazitiven Elemente ($C_1$–$C_4$) derart angeordnet sind, dass die Spannung an dem ersten Eingang des Komparators (K), abhängig von den Schaltpositionen jedes der verbleibenden Schalter ($O_1$–$O_4$) ist.

4. Vorrichtung nach Anspruch 3, dadurch gekennzeichnet, dass die Kapazitäten der verbleibenden kapazitiven Elemente ($C_1$–$C_4$) gegenseitig binär gewichtet sind.

5. Vorrichtung nach den Ansprüchen 3 bis 4, dadurch gekennzeichnet, dass die verbleibenden Schalter ($O_1$–$O_4$) Steuersignale ($b_4$–$b_1$) aus dem Ausgleichsfilter (B) erhalten.

6. Vorrichtung nach den Ansprüchen 3 bis 4, dadurch gekennzeichnet, dass die verbleibenden Schalter ($O_1$–$O_4$) Steuersignale von einer getrennten Einrichtung für die Abfrage und Annäherungslogik erhalten, die mit dem Ausgleichsfilter (B) verbunden ist,

**Revendications**

1. Dispositif incorporé dans un système de télécommunication pour la transmission d'une information numérique en duplex, dans lequel le dispositif détecte des signaux émis par une extrémité éloignée et génère des signaux de correction qui sont destinés à régler un filtre d'équilibrage numérique pour l'élimination d'écho adaptative, caractérisé en ce que le dispositif comprend un ensemble d'éléments capacitifs ($C_O$–$C_4$), un ensemble de commutateurs commandés ($0_0$–$0_5$) et un comparateur (K) qui sont associés comme dans un convertisseur A/N pour la conversion par des redistributions de charges, en ce qu'une ligne de signal qui arrive de l'extrémité éloignée est connectée à un point correspondant à l'entrée d'un tel convertisseur, en ce que les positions de commutation des commutateurs commandés ($0_1$–$0_4$), à un moment qui correspond à une phase d'échantillonnage d'un tel convertisseur, correspondent à la valeur de l'estimation d'écho instantanée avec un signe inversé (–$e'_k$), en ce que les positions de commutation précitées, à un moment qui correspond au moment d'une première approximation d'un tel convertisseur, correspondent à un code de zéro (0) et à un moment qui correspond au moment d'une seconde approximation, sous la dépendance du résultat de la comparaison du comparateur (K) pour la première approximation, correspondent à la valeur d'une estimation de niveau d'extrémité éloignée avec un signe positif ou négatif, le résultat de la comparaison pour la première approximation constituant une estimation ($a'_k$) du signal de l'extrémité éloignée ($a_k$), et cette estimation du signal de l'extrémité éloignée ainsi que lè résultat de la comparaison et la seconde approximation sont utilisés pour régler le filtre d'équilibrage (B).

2. Dispositif selon la revendication 1, caractérisé en ce que l'un des éléments capacitifs ($C_O$) est connecté entre une première entrée du comparateur (K) et l'un des commutateurs ($0_0$) et ce commutateur peut être commuté entre la ligne de signal entrante et une tension de référence ($V_4$), en ce qu'un autre des commutateurs ($0_5$) est connecté à la première entrée, et en ce que ce commutateur ($0_5$) peut être commuté entre une tension de référence ($V_3$) et une position ouverte.

3. Dispositif selon la revendication 2, caractérisé en ce que les éléments capacitifs restants ($C_1$–$C_4$) sont respectivement connectés en série avec l'un des commutateurs restants ($0_1$–$0_4$), en ce que ces commutateurs peuvent être commutés entre deux tensions de référence ($V_1$–$V_2$) et en ce que ces éléments capacitifs ($C_1$–$C_4$) sont connectés de façon que la tension sur la première entrée du comparateur (K) soit sous la dépendance des positions de commutation de chacun des commutateurs restants précités ($0_1$–$0_4$).

4. Dispositif selon la revendication 3, caractérisé en ce que les capacités des éléments capacitifs restants ($C_1$–$C_4$) sont pondérées mutuellement de façon binaire.

5. Dispositif selon les revendications 3–4, caractérisé en ce que les éléments de commutation restants ($0_1$–$0_4$) reçoivent des signaux de commande ($b_4$–$b_1$) provenant du filtre d'équilibrage (B).

6. Dispositif selon les revendications 3–4, caractérisé en ce que les commutateurs restants ($0_1$–$0_4$) reçoivent des signaux de commande provenant d'une logique d'échantillonnage et d'approximation séparée, qui est connectée au filtre d'équilibrage (B).

Fig.1

Fig.3

Fig.2

Fig.5

Fig.4

EP 0 252 038 B1